(19) Europäisches Patentamt
European Patent Office
Office européen des brevets

(11) **EP 1 521 527 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(21) Anmeldenummer: **03763664.4**

(22) Anmeldetag: **30.06.2003**

(51) Int Cl.:
***A01N 43/32*** *(2006.01)*

(86) Internationale Anmeldenummer:
**PCT/EP2003/006888**

(87) Internationale Veröffentlichungsnummer:
**WO 2004/006666 (22.01.2004 Gazette 2004/04)**

(54) **FUNGIZIDE MISCHUNGEN AUF BASIS VON DITHIANON**
FUNGICIDAL MIXTURES BASED ON DITHIANON
MELANGES FONGICIDES A BASE DE DITHIANONE

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **10.07.2002 DE 10231295**

(43) Veröffentlichungstag der Anmeldung:
**13.04.2005 Patentblatt 2005/15**

(60) Teilanmeldung:
**05016043.1 / 1 606 998**
**05016044.9 / 1 611 789**
**05016045.6 / 1 586 239**

(73) Patentinhaber: **BASF Aktiengesellschaft**
**67056 Ludwigshafen (DE)**

(72) Erfinder:
- **AMMERMANN, Eberhard**
  **64646 Heppenheim (DE)**
- **STIERL, Reinhard**
  **67251 Freinsheim (DE)**
- **SCHÖFL, Ulrich**
  **68782 Brühl (DE)**
- **SCHELBERGER, Klaus**
  **67161 Gönnheim (DE)**
- **SCHERER, Maria**
  **76829 Godramstein (DE)**
- **HENNINGSEN, Michael**
  **67227 Frankenthal (DE)**
- **GOLD, Randall, Even**
  **67283 Obrigheim (DE)**

(56) Entgegenhaltungen:
**EP-A- 0 040 345** **EP-A- 0 065 485**
**EP-A- 0 196 038** **EP-A- 0 236 689**
**EP-A- 0 267 778** **EP-A- 0 354 182**
**EP-A- 0 526 206** **EP-A- 0 556 157**
**EP-A- 0 951 831** **WO-A-96/16048**
**WO-A-98/47367** **WO-A-03/090538**
**DE-A- 3 609 645** **DE-A- 4 318 372**

- **DATABASE CA [Online] CHEMICAL ABSTRACTS SERVICE, COLUMBUS, OHIO, US; H.FLEMMING ET AL.: "Dithianon; an organic compound with wide fungicidal efficiency" retrieved from STN-INTERNATIONAL Database accession no. 60:5851 CA XP002259625 & ZEITSCHRIFT FÜR PFLANZNKRANKHEITEN UND PFLANZENSCHUTZ, Bd. 70, Nr. 1, 1963, Seiten 4-11,**
- **DATABASE CA [Online] CHEMICAL ABSTRACTS SERVICE, COLUMBUS, OHIO, US; P.E.RUSSELL ET AL.: "Fluquinconazole, a novel broad-spectrum fungicide for foliar application" retrieved from STN-INTERNATIONAL Database accession no. 118:185737 CA XP002274263 & BROGHTON DROP PROTECTION CONFERENCE -- PESTS AND DISEASES, Nr. 1, 1992, Seiten 411-418,**
- **N.N.: "SCORE Top; Fungizid zur Bekämpfung von Schorf, Mehltau und Blütenmonilia im Obstbau" SCORE TOP (PRODUKTINFORMATIONSBLATT), Januar 2002 (2002-01), XP002274385**
- **DATABASE CROPU [Online] J.RUEEGG ET AL.: "Adaption of spray dosage in stone-fruit orchards on the basis of tree row volume" retrieved from STN-INTERNATIONAL Database accession no. 2000-86655 CROPU XP002274264 & BULL. OEPP, Bd. 29, Nr. 1-2, 1999, Seiten 103-110,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 521 527 B1

- ANONYMOUSLY: "Combinations of microbiocides for improved plant protection in pomefruit" RESEARCH DISCLOSURE., Nr. 29748, Januar 1989 (1989-01), XP002274262 KENNETH MASON PUBLICATIONS, HAMPSHIRE., GB ISSN: 0374-4353
- DATABASE CROPU [Online] Y.ZHANG ET AL.: "Variation in Sensitivity to Sterol Biosynthesis Inhibitors (SBI) of Different Isolates of Monilinia Species" retrieved from STN-INTERNATIONAL Database accession no. 1991-86994 CROPU XP002274265 & Z.PLANZENKR.PFLANZENSCHUTZ, Bd. 98, Nr. 3, 1991, Seiten 317-322,
- DATABASE CA [Online] CHEMICAL ABSTRACTS SERVICE, COLUMBUS, OHIO, US; M.K.KIMURA ET AL.: "In vitro sensibiliy of Botrytis cinerea to fungicides" retrieved from STN-INTERNATIONAL Database accession no. 137:243354 CA XP002274266 & CIENCIA E AGROTECNOLOGIA, Bd. 25, Nr. 5, 2001, Seiten 1150-1160,

## Beschreibung

Die vorliegende Erfindung betrifft fungizide Mischungen, enthaltend

A) die Verbindung der Formel I

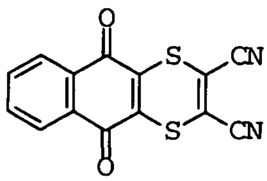

I

und

B) das Azolderivat II

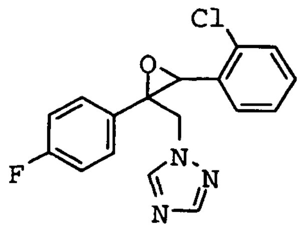

II

in einer synergistisch wirksamen Menge.

Außerdem betrifft die Erfindung Verfahren zur Bekämpfung von Schadpilzen mit Mischungen der Verbindungen I und II und die Verwendung der Verbindungen I und II zur Herstellung derartiger Mischungen.

Die Verbindung der Formel I (common name: dithianon) sowie Verfahren zu ihrer Herstellung sind in der GB-A 857 383 beschrieben.

Die Verbindung der Formel II, ihre Herstellung und ihre Wirkung gegen Schadpilze ist ebenfalls aus der Literatur bekannt (common name: epoxiconazole; EP-A 094 564).

DE-A-3609645 beschreibt synergistische Mischungen von Dithianon mit den Triazolfungiziden Myclobutanil, DPX-6573, 5-3308 und Penconazol.

EP-A-0556157 beschreibt synergistische Mischungen von Epoxiconazol mit Anilinopyrimidinfungiziden.

Im Hinblick auf eine Senkung der Aufwandmengen und eine Verbreiterung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II oder bei Anwendung der Verbindungen I und II nacheinander Schadpilze besser bekämpfen lassen als mit den Einzelverbindungen.

Üblicherweise kommen Mischungen der Verbindung I mit dem Azolderivat II zur Anwendung. Unter Umständer können jedoch Mischungen vorteilhaft sein, die zusätzlich zu den Verbindungen I und II mindestens ein weiteres Azolderivat II-1, II-3-II-7 enthalten.

Als weitere Azolderivate im voranstehenden Sinne kommen folgende Verbindungen in Frage:

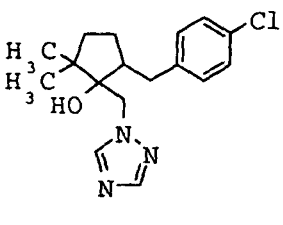

II-1

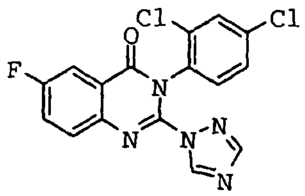

II-3

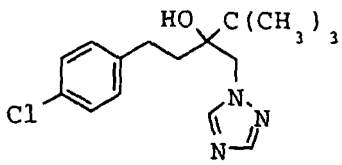

II-4

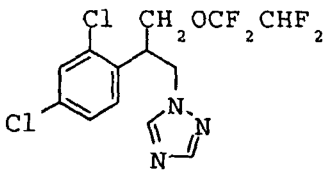

II-5

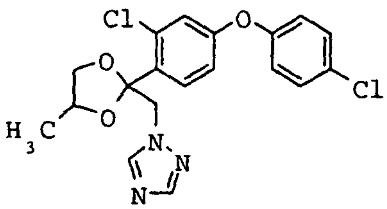

II-6

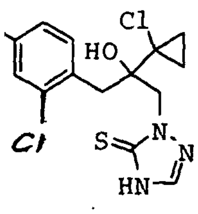

II-7

Sie sind ebenfalls aus der Literatur bekannt:

| Verbindung Nr. | common name | Literatur |
|---|---|---|
| II-1 | metconazole | EP-A 267 778 |
| II-3 | fluquinconazole | Pesticide Manunal, 12th Ed., p.449 (2000) |
| II-4 | tebuconazole | EP-A 040 345 |
| II-5 | tetraconazole | EP-A 234 242 |
| II-6 | difenoconazole | EP-A 065 485 |
| II-7 | prothioconazole | WO-A 96/16048 |

Die Verbindungen II, II-1 und II-3 bis II-7 sind wegen ihres basischen Charakters in der Lage, mit anorganischen

oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure, Kohlensäure und Salpetersäure.

Als organische Säuren kommen beispielsweise Ameisensäure, und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der *Ascomyceten, Deuteromyceten, Oomyceten* und *Basidiomyceten,* aus. Sie sind z.T. systemisch wirksam und können daher auch als Blatt- und Bodenfungizide eingesetzt werden.

Besondere Bedeutung haben sie für die Bekämpfung von Pilzen an verschiedenen Kulturpflanzen wie Gemüsepflanzen (z.B. Gurken, Bohnen und Kürbisgewächse), Obstpflanzen, Wein, aber auch Gerste, Gras, Hafer, Kaffee, Mais, Roggen, Soja, Weizen, Zierpflanzen, Zuckerrohr und einer Vielzahl von Samen.

Insbesondere eignen sie sich zur Bekämpfung der folgenden pflanzenpathogenen Pilze: *Erysiphe graminis* (echter Mehltau) an Getreide, *Erysiphe cichoracearum* und *Sphaerotheca fuliginea* an Kürbisgewächsen, *Podosphaera leucotricha* an Äpfeln, *Uncinula necator* an Reben, Puccinia-Arten an Getreide, *Rhizoctonia-Arten* an Baumwolle, Reis und Rasen, *Ustilago*-Arten an Getreide und Zuckerrohr, *Venturia inaequalis* (Schorf) an Äpfeln, *Helminthosporium*-Arten an Getreide, *Septoria nodorum* an Weizen, *Botrytis cinerea* (Grauschimmel) an Erdbeeren, Gemüse, Zierpflanzen und Reben, *Cercospora arachidicola* an Erdnüssen, *Pseudocercosporella herpotrichoides* an Weizen und Gerste, Pseudoperonospora-Arten an Kürbisgewächsen und Hopfen, *Plasmopara viticola* an Reben, *Alterna*ria-Arten an Gemüse und Obst sowie *Fusarium*- und *Verticillium*-Arten.

Sie sind außerdem im Materialschutz (z.B. Holzschutz) anwendbar, beispielsweise gegen *Paecilomyces variotii.*

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 100:1 bis 1:10, vorzugsweise 10:1 bis 1:1, insbesondere 5:1 bis 1:1 angewandt.

Die Aufwandmengen für die Verbindung I liegen entsprechend in der Regel bei 5 bis 2000 g/ha, vorzugsweise 10 bis 1000 g/ha, insbesondere 50 bis 750 g/ha.

Die Aufwandmengen der erfindungsgemäßen Mischungen liegen je nach Art des gewünschten Effekts für die Verbindungen II bei 5 g/ha bis 500 g/ha, vorzugsweise 50 bis 500 g/ha, insbesondere 50 bis 200 g/ha.

Bei der Saatgutbehandlung werden im allgemeinen Aufwandmengen an Mischung von 0,001 bis 1 g/kg Saatgut, vorzugsweise 0,01 bis 0,5 g/kg, insbesondere 0,01 bis 0,1 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Beispiele für Formulierungen sind:

1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ

werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.
Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die fungizide Wirkung der Verbindungen und der Mischungen läßt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel 1: Wirksamkeit gegen den Grauschimmel an Paprikablättern verursacht durch *Botrytis cinerea*

Paprikasämlinge der Sorte "Neusiedler Ideal Elite" wurden, nachdem sich 4 bis 5 Blätter gut entwickelt hatten, mit einer wässrigen Suspension in der unten angegebenen Wirkstoffkonzentration bis zur Tropfnässe besprüht. Am nächsten Tag wurden die behandelten Pflanzen mit einer Sporensuspension von *Botrytis cinerea,* die 1,7 x $10^6$ Sporen/ml in einer 2 %-igen, wässrigen Biomalzlösung enthielt, inokuliert. Anschließend wurden die Versuchspflanzen in eine Klimakammer mit 22 bis 24°C und hoher Luftfeuchtigkeit gestellt. Nach 5 Tagen konnte das Ausmaß des Pilzbefalls auf den Blättern visuell in % ermittelt werden.

Die Auswertung erfolgt durch Feststellung der befallenen Blattflächen in Prozent. Diese Prozent-Werte werden in Wirkungsgrade umgerechnet.

Der Wirkungsgrad (W) wird nach der Formel von Abbot wie folgt berechnet:

$$W = (1 - \alpha/\beta)\bullet 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y - x\cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | (99 % Befall) | 0 |
| 2 | I (Dithianon) | 16<br>4<br>1<br>0,25 | 0<br>0<br>0<br>0 |
| 3 | II<br>(Epoxiconazol) | 1<br>0,25 | 9<br>9 |

Tabelle B - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 4 | I + II<br>4 + 0,25 ppm<br>16 : 1 | 39 | 9 |
| 5 | I + II<br>4 + 1 ppm<br>4 : 1 | 49 | 9 |
| 6 | I + II<br>1 + 0,25 ppm<br>4 : 1 | 39 | 9 |
| 7 | I + II<br>1 + 1 ppm<br>1 : 1 | 59 | 9 |
| 8 | I + II<br>0,25 + 0,25 ppm<br>1 : 1 | 29 | 9 |
| 9 | I + II<br>0,25 + 1 ppm<br>1 : 4 | 44 | 9 |
| *) berechneter Wirkungsgrad nach der Colby-Formel | | | |

Anwendungsbeispiel 2: Wirksamkeit gegen die Dürrfleckenkrankheit der Tomate verursacht durch *Alternaria solani*

Blätter von Topfpflanzen der Sorte "Große Fleischtomate St. Pierre" wurden mit einer wässriger Suspension in der unten angegebenen Wirkstoffkonzentration bis zur Tropfnässe besprüht. Am folgenden Tag wurden die Blätter mit einer wässrigen Sporenaufschwemmung von *Alternaria solani* in 2 % Biomalzlösung mit einer Dichte von 0,17 x $10^6$ Sporen/ml infiziert. Anschließend wurden die Pflanzen in einer wasserdampfgesättigten Kammer bei Temperaturen zwischen 20 und 22°C aufgestellt. Nach 5 Tagen hatte sich die Krautfäule auf den unbehandelten, jedoch infizierten Kontrollpflanzen so stark entwickelt, dass der Befall visuell in % ermittelt werden konnte.

Tabelle C - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 10 | Kontrolle (unbehandelt) | (81 % Befall) | 0 |
| 11 | I (Dithianon) | 4<br>1<br>0,25 | 0<br>0<br>0 |
| 12 | II<br>(Epoxiconazol) | 1<br>0,25 | 75<br>63 |

Tabelle D - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 13 | I + II<br>4 + 0,25 ppm<br>16 : 1 | 75 | 63 |
| 14 | I + II<br>1 + 0,25 ppm<br>4 : 1 | 75 | 63 |
| 15 | I + II<br>0,25 + 0,25 ppm<br>1 : 1 | 82 | 63 |
| 16 | I + II<br>0,25 + 1 ppm<br>1 : 4 | 88 | 75 |
| *) berechneter Wirkungsgrad nach der Colby-Formel | | | |

Aus den Ergebnissen des Versuchs geht hervor, daß der beobachtete Wirkungsgrad in allen Mischungsverhältnissen höher ist, als nach der Colby-Formel vorausberechnet.

## Patentansprüche

**1.** Fungizide Mischung, enthaltend

A) die Verbindung der Formel I

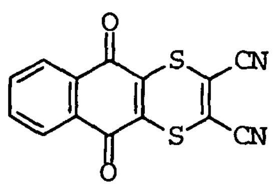

I

und
B) das Azolderivat II

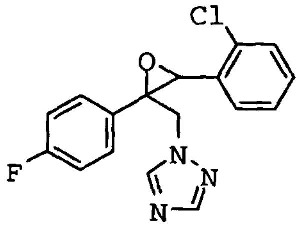

II

in einer synergistisch wirksamen Menge.

**2.** Fungizide Mischungen nach Anspruch 1, zusätzlich enthaltend mindestens ein Azolderivat aus der Gruppe II-1, II-3, II-4, II-5, II-6 und II-7.

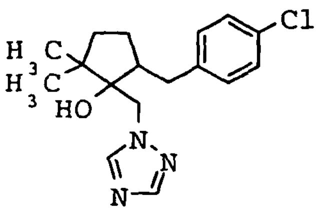

II-1

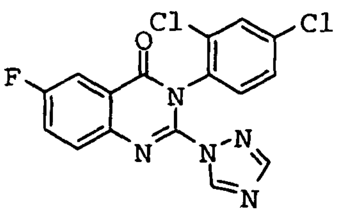

II-3

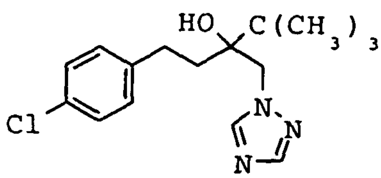

II-4

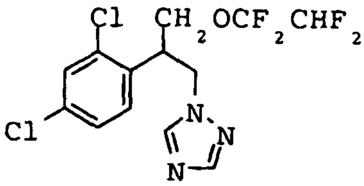

II-5

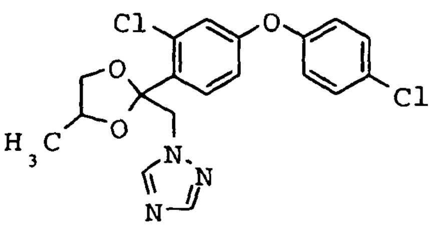

II-6

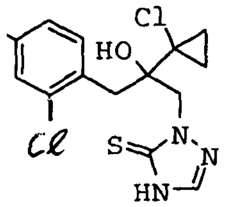

II-7

3. Fungizide Mischungen nach Anspruch 1, **dadurch gekennzeichnet, daß** das Gewichtsverhältnis der Verbindung I zu der Verbindung II 100:1 bis 1:10 ist.

4. Fungizides Mittel, enthaltend einen festen oder flüssigen Trägerstoff und eine Mischung gemäß Anspruch 1 oder 2.

5. Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der fungiziden Mischung gemäß Ansprüchen 1 bis 3 behandelt.

6. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 5 bis 2000 g/ha der Verbindung I gemäß Anspruch 1 behandelt.

7. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 5 bis 500 g/ha mindestens einer Verbindung II gemäß Anspruch 1 oder 2 behandelt.

8. Verfahren zur Bekämpfung von *Boytritis cinerea* gemäß Ansprüchen 5 bis 7.

9. Verwendung der Verbindungen der Formeln I und II gemäß Anspruch 1 zur Herstellung einer Mischung gemäß Anspruch 1.

## Claims

1. A fungicidal mixture, comprising

A) the compound of the formula I

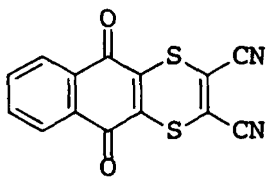

I

and
B) the azole derivative II

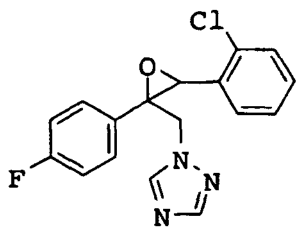

II

in a synergistically effective amount

2. The fungicidal mixture, according to claim 1, additionally comprising at least one azole derivative from the group II-1, II-3, II-4, II-5, II-6 and II-7

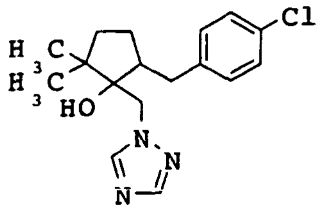

II-1

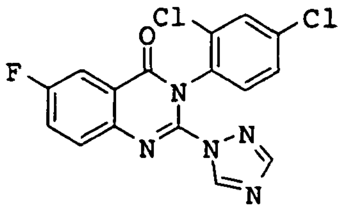

II-3

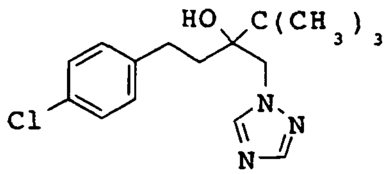

II-4

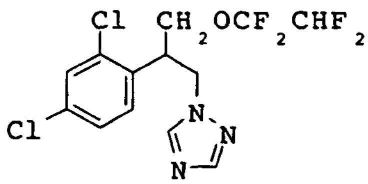

II-5

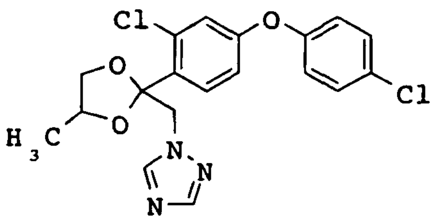

II-6

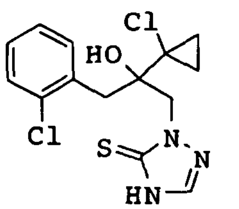

II-7

3. The fungicidal mixture according to claim 1, wherein the weight ratio of the compound I to the compound II is from

100:1 to 1:10.

4. The fungicidal composition comprising a solid or liquid carrier and a mixture according to claim 1 or 2.

5. A method for controlling harmful fungi, which comprises treating the harmful fungi, their habitat, or the plants, seeds, soils, areas, materials or spaces to be kept free from them with the fungicidal mixture according to claims 1 to 3.

6. The method according to claim 5, which comprises treating the harmful fungi, their habitat, or the plants, seeds, soils, areas, materials or spaces to be kept free from them with from 5 to 2000 g/ha of the compound I according to claim 1.

7. The method according to claim 5, which comprises treating the harmful fungi, their habitat, or the plants, seeds, soils, areas, materials or spaces to be kept free from them with from 5 to 500 g/ha of at least one compound II according to claim 1 or 2.

8. A method for controlling *Botritis cinerea* according to claims 5 to 7.

9. The use of the compounds of the formulae I and II according to claim 1 for preparing a mixture according to claim 1.

**Revendications**

1. Mélange fongicide contenant

A) le composé de la formule I :

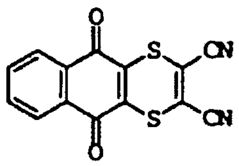

I

et
B) le dérivé azole II :

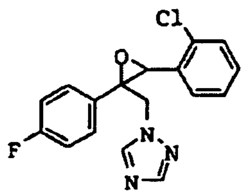

II

en une quantité efficace du point de vue synergique.

2. Mélanges fongicides suivant la revendication 1, contenant en supplément au moins un dérivé azole du groupe II-1, II-3, II-9, II-5, II-6 et II-7 :

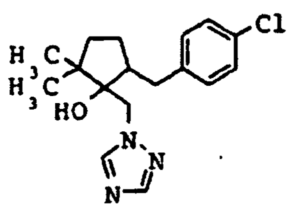

II-1

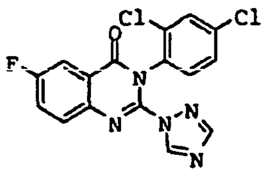

II-3

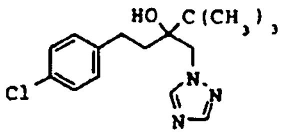

II-4

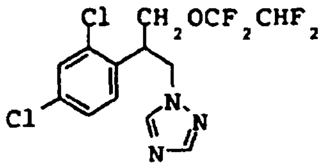

II-5

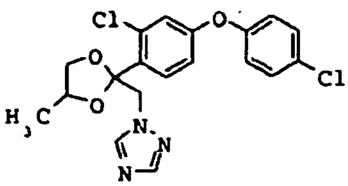

II-6

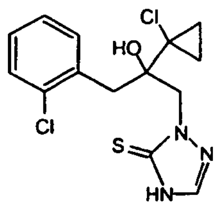

II-7.

3. Mélanges fongicides suivant la revendication 1, **caractérisés en ce que** le rapport pondéral entre le composé I et le composé II est de 100/1 à 1/10.

4. Produit fongicide, contenant un support solide ou liquide et un mélange suivant la revendication 1 ou 2.

5. Procédé pour lutter contre des champignons nuisibles, **caractérisé en ce qu'**on traite avec le mélange fongicide suivant les revendications 1 à 3 les champignons nuisibles, leur environnement ou les plantes, semences, sols, surfaces, matériels ou espaces qui doivent en être libérés.

6. Procédé suivant la revendication 5, **caractérisé en ce qu'**on traite avec 5 à 2 000 g/ha du composé 1 suivant la revendication 1 les champignons nuisibles, leur environnement ou les plantes, semences, sols, surfaces, matériels ou espaces qui doivent en être libérés.

7. Procédé suivant la revendication 5, **caractérisé en ce qu'**on traite avec 5 à 500 g/ha d'au moins un composé II suivant la revendication 1 ou 2 les champignons nuisibles, leur environnement ou les plantes, semences, sols,

surfaces, matériels ou espaces qui doivent en être libérés.

**8.** Procédé pour lutter contre *Boytritis cinerea* suivant les revendications 5 à 7.

**9.** Utilisation des composés des formules I et II suivant la revendication 1, pour la préparation d'un mélange suivant la revendication 1.